# EUROPEAN PATENT APPLICATION

(11) **EP 1 199 143 A2**
(43) Date of publication of application: **24.04.2002**
(21) Application number: 01124512.3
(22) Date of filing: 12.10.2001
(51) Int. Cl.: B28C 5/00, E04F 21/04, E04F 13/02, C04B 28/10

(54) **Method and material for preparing a decorative plaster and method for applying it**

(30) Priority: 17.10.2000 IT MI002244
(71) Applicant: MEDIL S.N.C. DI MENZIO R.&C., 28293 VERBANIA TROBASO (VERBANIA) (IT)
(72) Inventor: Menzio, Daniele, Dott. Arch., 28293 Verbania Trobaso (Verbania) (IT)
(74) Representative: Cicogna, Franco

(57) **Abstract**

A method for preparing a decorative plaster comprises the steps of preparing marble and/or granite powders and granules from quarry ground materials; drying the powders and granules, preparing a mixture of concrete masses modified by adding marble and granite powders and granules, the mixture comprising calcium hydroxide and homogenizing, fluidizing, plasticizing and aerating additives; and then packaging the mixture.

## Description

### BACKGROUND OF THE INVENTION

The present invention relates to a method and product or material for making a decorative plaster, and a method for applying said decorative plaster.

There are already known several classes of finishing plaster materials, for masonry applications, such as mixtures comprising stone granules, of different size and colors, made of concrete binding materials or the like, for providing a coated surface similar to a large natural granite plate.

The end effect, actually, provides a finishing similar to that of the natural stone, therefrom the ground granules or gains are derived.

In this connection it should be pointed out that the methods for making a stone powder and granule mixtures or blend similar to a natural stone are very olds, and the obtained effect continuous to attract a lot of persons.

The main difficulty associated with a use of the above mentioned mixers is not that of finding the raw stone materials (even if some of them are very rare), but that of properly applying said mixture, which makes these mixtures or products very expensive because of long and difficult treatment processes to which said mixtures must be subjected, which are nearly exclusively manually carried out.

Actually, the diffusion of the so called bushhammered plaster materials, has been hindered by several factors, even if these materials should have a much broader application range due to their high quality and time duration properties.

### SUMMARY OF THE INVENTION

Accordingly, the aim of the present invention is to provide such a decorative plaster material and a method for applying it which overcome the above mentioned drawbacks of the prior art.

Within the scope of the above aim, a main object of the present invention is to greatly simplify the making process of said materials, which at present is nearly manually performed, as well as the end application process or method, which is at present nearly exclusively based on a manual bushhammering procedure.

According to one aspect of the present invention, the above mentioned aim and objects, as well as yet other objects, which will become more apparent hereinafter, are achieved by a method for preparing a decorative plaster material, characterized in that said method comprises the steps of:
a) preparing marble and granite powders and granules derived from quarry ground materials;
b) drying said powders and granules;
c) preparing a mixture of modified concrete masses, hydrated lime, with added marble and/or granite powders and granules, said mixture being further added with homogenizing, fluidizing, plasticizing and aerating additives; and
d) packaging said mixture.

The above mentioned aim and objects, as well as yet other objects, which will become more apparent hereinafter, are further achieved by a method for applying a decorative plaster, characterized in that said method comprises the steps of:
e) providing plaster bearing guides;
f) applying a first clamping *render*, based on a premixed concrete mortar, lime and inert materials;
g) spraying a premixed decorative material up to the necessary thickness and leveling the premixed material;
h) smoothing by a steel plastering trowel;
i) manually or mechanically brushing;
l) cleaning by a manual washing or spraying and then rinsing.

### BRIEF DESCRIPTION OF THE DRAWINGS

Further characteristics and advantages will become more apparent hereinafter from the following detailed disclosure of a preferred, though not exclusive, embodiment of the invention, which is illustrated, by way of an indicative, but not limitative example, in the accompanying drawings, where:
Figure 1 is a perspective view of a plaster bearing guide arranged on a masonry construction, according to the plaster applying method of the invention;
Figure 2 is a view similar to figure 1, illustrating the smoothing step;
Figure 3 is a further view schematically illustrating the brushing step;
Figure 4 is a further schematic view illustrating the plastic material after the brushing step;
Figure 5 is a further schematic view illustrating the finished plaster after removing the plaster bearing guide; and
Figure 6 is a further schematic view illustrating geometric decorative pattern made by a method according to the present invention.

### DESCRIPTION OF THE PREFERRED EMBODIMENT

The decorative plaster, made and applied according to the present invention, pertains to the decorative plaster mortar class, including concrete masses modified by adding marble and granite powders and granules, derived from grinding quarry materials, having any desired colors and particle size.

For using the mixture according to modern processing methods and suitable applying times, said mixture is properly formulated by adding homogenizing, fluidizing, plasticizing and aerating additives, at different rates, depending on the use and processing requirements.

Thereinbelow are indicated optimum rates for each single component of the base formulated mixture:

| *Binding materials* | |
|---|---|
| white and gray concrete | 12 ÷ 16% |
| hydrated lime | 6 ÷ 9% |

| *Marble and granite colored powders* | |
|---|---|
| powders within a particle size range of 0-1.5 mm or more | 21 ÷ 27% |

| *Marble and granite colored granules* | |
|---|---|
| granules in a particle size range of 2-5 mm or more | 50 ÷ 54% |

| *Additives* | |
|---|---|
| fluidizing, plasticizing, homogenizing, aerating additives | 0.9 ÷ 1.2% |

The mixture forming the plaster must be subjected to a series of preparing operating cycles, mainly based on a selection and fitting of the marble powders and granules.

The concrete binding materials and the additives comprise selected and refined powders, and do not require any specifically designed preparing method.

On the other hand, the powders and granules derived from grinding stones (marbles and granites), are usually processed in separated environments, in a direct contact with the atmospheric agents and rain water.

The preparing method according to the present invention comprises a step of providing suitable drying devices, for example of the type used in drying processes performed on inert mineral materials, before mixing the powders proper.

This is the second main difference (the first being constituted by the basic formulated material) of conventional mixtures which are prepared on the field and the subject industrially made premixed products.

The requirements of preparing mixtures in a ready condition for packaging and selling and adapted to be used by merely adding clean fresh water, compels to use raw materials specifically selected and dried, in order to prevent any condensate and moisture from accumulating inside the packages, which would start a cementifying process of the binding materials, thereby making the end products unsuitable for use.

The mixing, in particular, can be performed in conventional mixers, of a mechanical rotary type, a fixed cradle type or any other desired types, adapted to provide an even homogenizing of the powders and low rates of additives.

The mixed product can be supplied to conventional storing hoppers (silos) in a ready condition to be packaged by using an automatic type of packaging machine, either of a pneumatic or an air negative pressure type.

Then, at the outlet of the making system, the product will be supplied in an already packaged condition, and can be sent to the using place to be used as required.

The plaster material applying method can be carried out according to conventional use requirements: either manually, by mixing in mixing devices and applying it manually by plastering trowels or the like applying means, or automatically, by mechanical plastering machine and/or by spraying it by air guns or the like.

According to the present invention, the method for applying the subject decorative plaster material comprises the following steps.

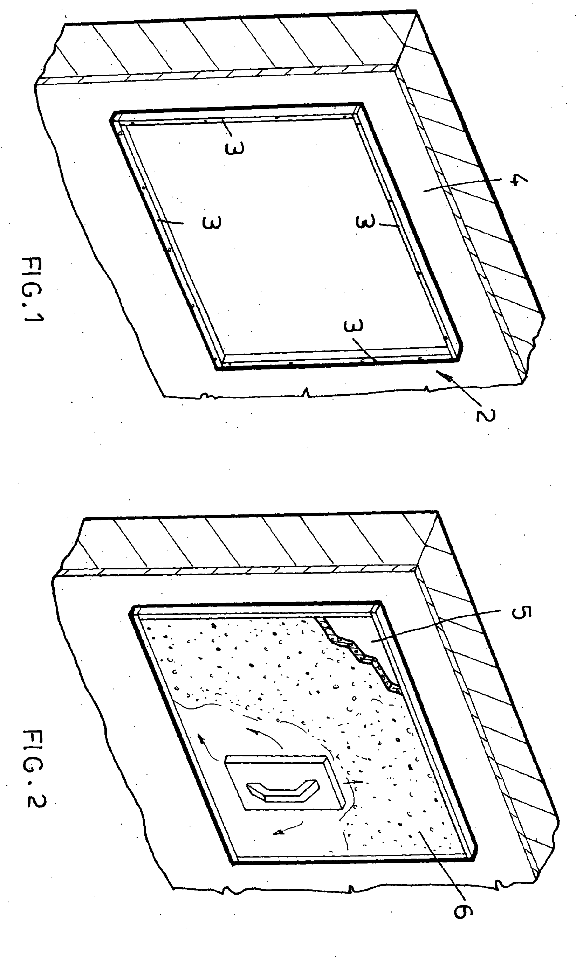

A first step, which is schematically shown in figure 1, of preparing suitable plaster bearing guides 2, including, for example wood strips 3 of trapezoidal cross section, with the short side facing the support, said guides being fixed to the masonry construction 4 (a brick or reinforced concrete construction) by fixing using conventional masonry nails.

The strips, upon removal, can aid the formation of geometric background decorative patterns 7, shown in figure 6, which must be made smooth and then painted with a contrasting color.

A second step, comprising the application of a first clamping *renter* 5, based on premixed mortar and concrete, lime and inert materials (for example river sand), possibly compounded with liquid binding resin, in emulsion form (which would be optimum on a smooth concrete construction), usually the day before the laying of the end decorative plaster.

This is carried out in order to provide a minimum drying time, before applying the following layer.

A third step, consisting of spraying the decorative premixed material 6 up to the desired or necessary thickness (for example 0.8-1.0 cm or more), to be levelled by and aluminium levelling implement.

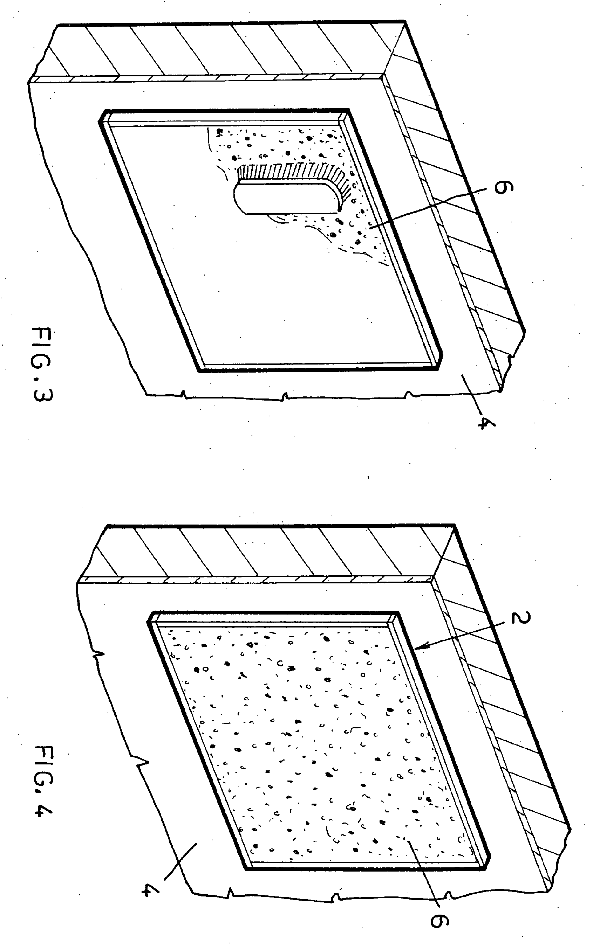

A fourth step, schematically shown in figure 2, consisting of smoothing by a steel plastering trowel or flexible rotary plastering implement and finishing trowel for parts difficult to be processed.

This is one of the most delicate operating steps, since each not properly processed detail will constitute an aesthetic defect after the provided ageing period and at the end of the plastering operation.

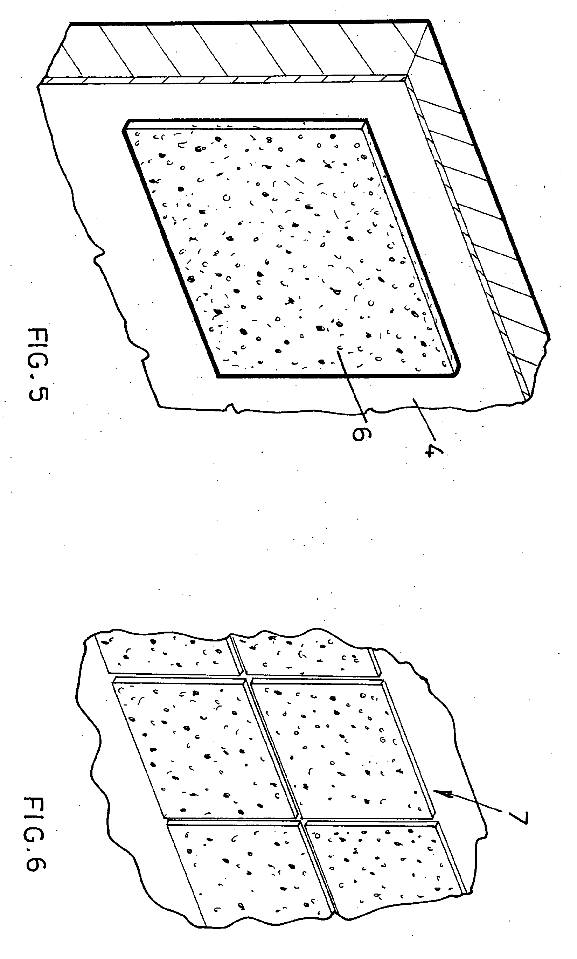

A fifth operating step, which is schematically shown in figure 3, consisting of a manual of mechanical brushing, by using a suitable rotary flexible brushing implement.

This step represents a substantial difference from conventional plastering materials which must be bushhammered.

Actually, the novel advantage of the inventive plastering applying method is that it can be greatly reduced the cost associated with the manual bushhammering operation.

A sixth cleaning step, consisting of a manual washing, or a spraying operation, by using 10% diluted hydrochloric acid, in a water solution, and by successively rinsing with a comparatively high amount of fresh clean water.

A seventh optional applying step consisting of applying a fixative penetrating coating, of a water repellent, microtranspirating type, in a solvent base, to provide a proper rain water permeability and absorption ratio, while allowing the coating to release vapors of the masonry construction owing to the microcapillarity of the decorative plaster.

Actually, the inventive plaster material has high transpirating and absorbing properties.

The invention has substantial differences from conventional types of bushhammered plastering materials.

At first, from an aesthetic standpoint, a bushhammered plaster must be manually processed or, in same rare cases, by using a pneumatic percussion means, or a bushhammer to provide the desired rustic finished pattern.

The smoothed plaster, which would be ready for a bushhammering or brushing processing, has an absolutely anonymous character and is very even with respect to its color and processing.

Only a subsequent processing thereof would remove the surface unpalpatable powder layer to expose the different tone colors of the contained powders and, in particular, of the marble or granite granules.

In a conventional bushhammered plastering, however, the surface would . appear decisely more rustic, and the stone granules would contrast from the so-called "plaster pulp", because of their different colors, and with sharp facets, due to the hammering treatment.

In the plastering material according to the invention, on the contrary, the surface would appear less rustic and the stone granules, while preserving their chromatic and size characteristics, are unbroken, i.e. in the status thereof derived from the quarry grinding operations.

This effect seems very similar to that of a "micro-mosaic pattern" than to the bushhammered surface of the prior bushhammered plastering materials.

In this connection, it should be furthermore pointed out that, in conventional methods, the bushhammering operation must be carried out after several ageing days, and each square meters of bushhammered surface would require a labour of a skilled bushhammering person for about an hour.

Thus, the cost of prior bushhammered plastering materials are actually excessive, thereby the bushhammering methods, in addition to being difficult to be performed, are nearly at present abandoned.

In the case of the present invention, on the contrary, the brushing operation can, and must, be carried out during the first few plastering material ageing hours (in average 1-5 hours of ageing) and each processed squared meter requires only a labour for about 5-15 minutes.

Then, the processing cost will be much less and the building place can be managed at most favorable conditions, since it would not be necessary to stop the works and restart it again after some days.

It has been found that the invention fully achieves the intended aim and objects.

In fact, the invention has provided a decorative plastering material preparing method and applying method which are much more advantageous than conventional systems, both from a mere cost standpoint and from the finishing aesthetic effect standpoint.

It should be apparent that, in practicing the invention, the used materials, as well as the contingent size and shapes, can be any, depending on requirements and the status of the art.

## Claims

1. A method for preparing a decorative plaster material, **characterized in that** said method comprises the steps of:
a) preparing marble and/or granite powders and granules derived from quarry ground materials;
b) drying said powders and granules;
c) preparing a mixture of modified concrete masses, hydrated lime, with added marble and/or granite powders and granules, said mixture being further added with homogenizing, fluidizing, plasticizing and aerating additives; and
d) packaging said mixture.

2. A method for applying a decorative plaster material, **characterized in that** said method comprises the method comprises the steps of:
e) providing plaster bearing guides;
f) applying a first clamping *render*, based on a premixed concrete mortar, lime and inert materials;
g) spraying a premixed decorative material up to the necessary thickness and leveling the premixed. material;
h) smoothing by a steel plastering trowel;
i) manually or mechanically brushing;
1) cleaning by a manual washing or spraying and then rinsing.

3. A method, according to Claim 1, **characterized in that** said method comprises a further step of applying a penetrating, microtranspirating, water repelling fixative coating, in a solvent base, to provide a set rain water permeability/absorption ratio while allowing vapours in a masonry to be released through the micrapillarity of the decorative plaster.

4. A method, according to Claim 2 or 3, **characterized in that** said step of providing plaster bearing guides comprises to provide trapezoidal cross-section wood strips having their short side facing the plaster support, said strips being fixed to the masonry construction by fixing or clamping nails, said strips, upon removal thereof, aiding a formation of background geometric decorations, to be smoothed and painted with contrasting colors.

5. A method, according to one or more of the preceding claims, **characterized in that** the steps of applying a first clamping *render*, based on a premixed concrete mortar, lime and inert materials, comprises a compounding with an emulsion binding liquid resin and being performed a day after applying the end decorative plaster, to provide a minimum drying period before laying a following layer.

6. A method, according to one or more of the preceding claims, **characterized in that** said decorative premixture spraying step is carried to a necessary thickness, for example 0.8-1.0 cm or more, and being followed by a levelling operation by an aluminium levelling implement.

7. A method, according to one or more of the preceding claims, **characterized in that** said smoothing step is performed by using a steel trowel and finishing trowel, for enough portions difficult to be processed.

8. A method, according to one or more of the preceding claims, **characterized in that** the brushing step is performed by a manual or mechanical brushing operation, by using a rotary flexible brushing implement.

9. A method, according to one or more of the preceding claims, **characterized in that** the cleaning step is performed by a manual washing operation or by a spraying operation, in which a 10% water solution of diluted hydrochloric acid is used.

10. A method, according to one or more of the preceding claims, **characterized in that** said method comprises one or more of the disclosed and/or illustrated features.

11. A product or material for making a decorative plaster, **characterized in that** said product comprises the following product components:
| *Binding materials* | |
|---|---|
| white and gray concretes | 12 ÷ 16% |
| hydrated lime | 6 ÷ 9% |
| *Marble and granite colored powders* | |
|---|---|
| powders within a particle size range of 0-1.5 mm or more | 21 ÷ 27% |
| *Marble and granite colored granules* | |
|---|---|
| granules in a particle size range of 2-5 mm or more | 50 ÷ 54% |
| *Additives* | |
|---|---|
| fluidizing, plasticizing, homogenizing, aerating additives | 0.9 ÷ 1.2% |

12. A method, according to one or more of the preceding claims, **characterized in that** said method comprises one or more of the disclosed and/or illustrated features.
